# EUROPEAN PATENT SPECIFICATION

(11) **EP 4 319 576 B1**
(45) Date of publication and mention of the grant of the patent: **02.04.2025**
(21) Application number: 22717012.3
(22) Date of filing: 04.04.2022
(51) Int. Cl.: A24F 40/00, A24F 40/20, A24F 40/51, A24F 40/60, A24F 47/00

(54) **INDOOR AIRFLOW INDICATORS FOR EXHALED CONSTITUENTS**
INNENRAUMLUFTSTROMANZEIGER FÜR AUSGEATMETE BESTANDTEILE
INDICATEURS DE FLUX D'AIR INTÉRIEUR POUR CONSTITUANTS EXPIRÉS

(30) Priority: 08.04.2021 EP 21167357
(43) Date of publication of application: 14.02.2024
(73) Proprietor: Philip Morris Products S.A., 2000 Neuchâtel (CH)
(72) Inventor: ELLIOTT-BOWMAN, Bernadette, 1015 Lausanne (CH); DUFFY, David Michael, 1015 Lausanne (CH)
(74) Representative: Abitz & Partner
(86) International application number: PCT/IB2022/053118
(87) International publication number: WO 2022/214939

(56) References cited:
- CN-A- 107 997 237
- US-A1- 2016 069 924
- US-A1- 2017 303 590

## Description

The present disclosure relates to airflow mapping for smoke free devices. The present disclosure also relates to aerosol generating devices that include airflow indicators.

Airflow in a home or public space can be adapted by smart fans, air purifiers, and heating, ventilation, and air conditioning (HVAC) systems to maintain user comfort. Indoor airflows provided by such apparatus and systems can be modelled to improve comfort for inhabitants and predict movement of airborne particles. Additionally, airflow within a home or public space may be monitored, predicted, and adjusted to control airborne particle flow.

Homes or public spaces may be mapped using Bluetooth, WiFi, Lidar, imaging, or other positioning systems or sensors. Such positioning systems may also be used to control smart devices such as fans, thermostats, HVAC systems, vacuums, or other smart devices.

Exhaled constituents from aerosol generating devices may circulate indoors. Exhaled constituents may have scents associated with use of the aerosol generating devices. Scents associated with use of the aerosol generating device may be perceived by a user of the aerosol generating device and others in the vicinity of the user. A user of an aerosol generating device and individuals other than the user of the aerosol generating device may want to manage how exhaled constituents move in an enclosed environment.

CN 107 997 237 A relates to an electronic cigarette system capable of reducing smoke pollution. The electronic cigarette system includes an electronic cigarette, a microprocessor, an environment detection module, and an atomizer.

US 2017/0303590 A1 relates to an electronic vaporizing device having a weather detection functionality or component for detecting a plurality of weather data associated with an environment proximate to the weather detection component.

US 2016/0069924 A1 relates to a wind direction indicator for hunters including a smoke generator, a housing, an electrical power source, an air pump and a switch all arranged such that the indicator may be actuated by a hunter using a single hand.

According to aspects of the present invention, there is provided a method for indicating an exhale direction for a user to exhale after drawing on an aerosol generating device. The method comprises determining an air pattern in proximity to an aerosol generating device and indicating the exhale direction based on the air pattern.

According to aspects of the present invention, there is provided an aerosol generating device. The aerosol generating device comprises a receptacle, an aerosol generating apparatus, control electronics, and an airflow sensor. The receptacle is configured to receive an aerosol generating article. The aerosol generating apparatus is configured to cause the aerosol generating article to generate an aerosol for inhalation by a user. The control electronics are operatively coupled to the aerosol generating apparatus. The airflow sensor is configured to detect one or more parameters of airflow external to the aerosol generating device. The control electronics are operatively coupled to the airflow sensor.

According to aspects of the present invention, there is provided an aerosol generating device. The aerosol generating device comprises a receptacle, an aerosol generating apparatus, control electronics, and an output indicator. The receptacle is configured to receive an aerosol generating article. The aerosol generating apparatus is configured to cause the aerosol generating article to generate an aerosol for inhalation by a user. The control electronics are operatively coupled to the aerosol generating apparatus. The control electronics are configured to cause the output indicator to indicate a direction in which a user should exhale after drawing on an aerosol generating device.

According to aspects of the present invention, there is provided a system comprising an air pattern detection subsystem, an exhale direction determination subsystem, and an output indicator subsystem. The air pattern detection subsystem is configured to detect parameters regarding an air pattern in proximity to an aerosol generating device. The exhale direction determination subsystem is configured to determine a direction a user should exhale after drawing on the aerosol generating device based on the detected parameters regarding the air pattern. The output indicator subsystem is configured to provide an indication to the user of the determined direction the user should exhale. The indicated direction may be based on a desired outcome. A desired outcome may include having a high concentration of exhaled constituents in a particular location, may include having a low concentration of exhaled constituents in a particular location, or may include having an even distribution of exhaled constituents in a particular location or the entire space.

The methods, systems, and apparatuses of the invention may evaluate location and properties of local air patterns. Accordingly, the methods, systems and apparatuses may indicate to users of aerosol generating devices directions to exhale based on the location and properties of local air patterns to move exhaled constituents in desirable ways. Desired outcomes regarding movement, or lack of movement, of exhaled constituents may be specified by the user. Information regarding the location and properties of local air patterns and information may be conveyed to the user. The user may select a desired outcome based on the conveyed information. The user may select a desired outcome that is, for example, most beneficial to the user, most beneficial to another individual, or more beneficial to the user and other individuals in the vicinity of the user.

The methods, systems, and apparatuses may be used in homes, in public indoor spaces, or both in homes and public indoor spaces. The methods, systems, and apparatuses of the present disclosure may provide greater control of exhaled constituents to allow the use of aerosol generating devices to be less contentious. Greater control of exhaled constituents may alter perception of exhaled constituents by other individuals in the vicinity of an aerosol generating devices. For example, greater control of exhaled constituents may reduce, prevent, or enhance noticeability of scents or aromas of exhaled constituents.

Determining the air pattern in proximity to the aerosol generating device may comprise determining a direction of airflow in proximity to the aerosol generating device. Direction of airflow may be determined in 2-dimensional or 3-dimensional space. Directions in 2-dimensional space may include cardinal directions, angles from a reference point, 2-dimensional cartesian coordinates, or other directions on a 2-dimensional plane. Directions in 3-dimenional space may include any 2-dimensional directions with an additional component orthogonal to the 2-dimensional plane.

Determining the air pattern in proximity to the aerosol generating device may comprise determining a speed of airflow in proximity to the aerosol generating device.

Determining the air pattern in proximity to the aerosol generating device may comprise determining a turbulence of airflow in proximity to the aerosol generating device. Turbulence is fluid motion characterized by chaotic changes in pressure and flow velocity. Airflow turbulence may be determined based on changes in airflow velocity over a given distance or throughout a region. Airflow turbulence may also be quantified by the eddy dissipation rate (EDR). The EDR is expressed in meters squared per seconds cubed (m²/s³). The EDR may vary from 0 to 1. An EDR of 0 indicates smooth or non-turbulent flow and an EDR of 1 indicates extreme turbulent flow.

Determining one or more of the direction of airflow, the speed of airflow, and the turbulence of airflow in proximity to the aerosol generating device may comprise collecting data from an airflow sensor.

Proximity may refer to a distance from a reference object, for example, an aerosol generating device, when such reference object is in fluid communication with the reference object at such distance. For example, being in proximity to an aerosol generating device, may refer to a distance or radius from the aerosol generating device. The distance or radius may be about 5 meters to about 10 meters. However, when the reference object is separated from the reference object by such that the reference object is not in fluid communication with the aerosol generating device, such reference object is not in proximity to the aerosol generating device for purposes of the present disclosure regardless of distance. For example, an air pattern within 5 meters of an aerosol generating device but separated by a wall or otherwise not in fluid communication may not be considered in proximity to the aerosol generating device. However, an air pattern in the same room as, and within 5 meters of the aerosol generating device, may be considered in proximity to the aerosol generating device.

The aerosol generating device may comprise the airflow sensor. The airflow sensor may sense air or gas flow including the amount of air or gas and the direction of the air or gas. At least a portion of the airflow sensor may be disposed on a surface of the aerosol generating to sense airflow around the aerosol generating device. The aerosol generating device may include multiple airflow sensors each disposed at a different location on the aerosol generating device.

The airflow sensor may be remote from the aerosol generating device. In other words, the airflow sensor may be a standalone device or incorporated in another device such as, for example, a smart fan, an HVAC system, an air purifier, or other smart device. More than one airflow sensor may be remote from the aerosol generating device. The airflow sensor may be configured to sense airflow and transmit data to the aerosol generating device or a system that includes an air pattern detection subsystem. Data may be transmitted using wired or wireless connections or protocols. Wireless connections may include, for example, WiFi, Bluetooth, near field communication (NFC), or other wireless communication protocols. An airflow sensor remote from the aerosol generating device may sense airflow throughout a building, room, or region including an air pattern in proximity to the aerosol generating device.

Determining one or more of the direction of airflow, the speed of airflow, and the turbulence of airflow in proximity to the aerosol generating device may comprise processing data from a ventilator. The ventilator may be a component of a HVAC system. Data from such systems may include air flow rates, fan speeds, intake and output locations within a space or building, or other system data. Such data may be used in conjunction with or in place of airflow sensor data.

Determining the air pattern in proximity to the aerosol generating device may comprise mapping an aspect of the air pattern on a three-dimensional representation of a space in proximity to the aerosol generating article. Aspects of air patterns may include, for example, airflow velocity, airflow volume, airflow speed, airflow direction, airflow gradients, or other airflow parameters. One or more aspects of the air pattern may be assigned to each of a set of points or coordinates within the three-dimensional representation of space. Alternatively, determining the air pattern in proximity to the aerosol generating device may comprise mapping an aspect of the air pattern on a two-dimensional representation of space. The three-dimensional or two-dimensional representation may be a simulation. Such representations may be graphically rendered. Graphically rendered representations may be presented to a user of the aerosol generating device.

The method may further comprise mapping the three-dimensional space in proximity to the aerosol generating article to generate the three-dimensional representation of the space. The three-dimensional space may be mapped using, for example, Global Position Systems (GPS), wireless reflection, time of flight, computer vision technologies, Lidar, imaging, acoustic sensors, mapping information from smart devices, or other positional or scanning technologies. Such mapping may include the location of walls, doorways, windows, ventilation locations, air intakes, air outputs, location data, objects, furniture, devices, people, or other physical objects. The three-dimensional representation of space may comprise a map of the three-dimensional space.

The method may further comprise identifying a location of the aerosol generating device in the map of the three-dimensional space. The position of the aerosol generating device may be identified based on a GPS device disposed in the aerosol generating device. Alternatively, the position of the aerosol generating device may be located on, or in a device remote to, the aerosol generating device that is connected to, or in communication with, the aerosol generating device. Such devices remote to the aerosol generating device may include, for example, a smart phone, a wearable, a mobile computer, a tablet, or other mobile computing device. Such devices may communicate with the aerosol generating device via a wired connection or wireless protocol.

The method may further comprise identifying a location of an individual in the map of the three-dimensional space. The individual may be a person, animal, plant, or organism other than a user of the aerosol generating device. A determination that such an individual is located in the map of the three-dimensional space may be based on a distance of the individual from the aerosol generating device. The individual or place may be identified using, for example, GPS, wireless reflection, time of flight, computer vision technologies, Lidar, imaging, acoustic sensors, mapping information from smart devices, or other positional or scanning technologies.

Indicating the exhale direction may comprise indicating a threshold direction that is likely to result in a concentration of exhaled constituents in air in a vicinity of the individual being below a threshold value. The threshold direction may be a direction or range that results in exhaled constituents dissipating or traveling such that the concentration of the exhaled constituents that reach an area at or around the individual are below a specified concentration.

Indicating the exhale direction may comprise indicating a minimum direction that is likely to result in a minimum concentration of exhaled aerosol constituents in air in the vicinity of the individual. The minimum direction may be the direction that results in the lowest concentration of exhaled constituents reaching an area at or around the individual. The minimum direction may be determined using modeling, simulation, or analysis. Such minimum may be an approximation based on a limited number of iterations rather than an absolute minimum.

The method may further comprise assessing a predetermined target for exhaled constituents in a place in the mapped three-dimensional space. A predetermined target may be assessed based on a location of the place. Locations that include designated smoking areas, outdoor spaces, ventilated spaces, or other smoke friendly locations may be assessed as having a high threshold target for exhaled aerosol constituents. Locations that include stores, restaurants, designated smoke-free areas, little or no airflow, or other locations where exhaled constituents may be perceived as undesirable may be designated as having a low threshold target.

Indicating the exhale direction may comprise indicating a threshold direction that is likely to result in a concentration of exhaled aerosol constituents in air in a vicinity of the place being below a threshold value, if the place is assessed as having a low threshold target. The threshold direction may be determined using modeling, simulation, or analysis. The threshold value may be a value that reduces the likelihood of exhaled constituents being perceived by individuals in the space.

Indicating the exhale direction may comprise indicating a minimum direction that is likely to result in a minimum concentration of exhaled constituents in air in the vicinity of the place, if the place is assessed as having a low threshold target. The minimum direction may be the direction that results in the lowest concentration of exhaled constituents reaching an area at or around the place. The minimum direction may be determined using modeling, simulation, or analysis. Such minimum may be an approximation based on a limited number of iterations rather than an absolute minimum.

Determining the air pattern may comprise determining a concentration of an aerosol constituent in air in proximity to the aerosol generating device. Determining the concentration of the aerosol constituent may comprise collecting data from an electrochemical sensor. The aerosol generating device may comprise the electrochemical sensor. Alternatively, the electrochemical sensor may be remote from the aerosol generating device. The electrochemical may be configured to detect one or more exhaled constituent. Preferably, the constituent detected is a constituent unique to the use of an aerosol generating device. For example, the electrochemical sensor may detect nicotine, a nicotine metabolite, an aroma molecule of a scent associated with use of an aerosol generating device, or the like.

Determining the concentration of the aerosol constituent in the air in proximity to the aerosol generating device may comprise processing data regarding a number of additional aerosol generating articles in use in proximity to the aerosol generating article. Determining that such additional aerosol generating articles are in use may be based on wireless communication with the additional aerosol generating articles, imaging, user input, or other device detection methods.

Determining the concentration of the exhaled constituents in the air in proximity to the aerosol generating device may comprise processing data regarding turnover rate of the air in proximity to the aerosol generating article. The turnover rate may be indicative of the amount of time it takes for existing exhaled constituents in proximity to the aerosol generating device to move from such space. In other words, the turnover rate may be indicative of the time it takes for the exhaled constituents to disperse from the area around the aerosol generating device.

Indicating the exhale direction may comprise indicating a threshold direction that is likely to result in a concentration of exhaled constituents in a vicinity of the aerosol generating device to be above a threshold value. Such threshold directions may be desired, for example, if a user of the aerosol generating device prefers to have a scent associated with exhaled constituents to accumulate in the vicinity of the user. Such threshold directions may be desired, for example, to cause increased concentration of exhaled constituents in certain locations, such as in proximity to a filtering device or in proximity to a smoking room.

Indicating the exhale direction may comprise indicating a maximum direction that is likely to result in a maximum concentration of exhaled aerosol constituents in a vicinity of the aerosol generating device. The maximum direction may be the direction that results in the greatest concentration of exhaled constituents around the aerosol generating device or user. The maximum direction may be determined using modeling, simulation, or analysis. Such maximum may be an approximation based on a limited number of iterations rather than an absolute maximum.

Indicating the exhale direction may comprise displaying a directional indicator on the aerosol generating device. Directional indicators may be visual, auditory, or tactile. Visual indicators may include lights or a display that can indicate a direction. For example, LEDs may be arranged at various points on an aerosol generating device that may light up, blink, flash, or pulse to indicate an exhale direction. Displays may be included in a smart phone, computing device, or wearable. Such displays may display symbols or text indicating an exhale direction to the user. Auditory indicators may be provided to the user using a speaker or other acoustic transducer. Such acoustic transducers may be incorporated in the aerosol generating device, a smart phone, a wearable device, a Bluetooth speaker, a computing device, or other electronic device. Auditory indicators may include speech instructions such as, for example, "exhale to the left," "exhale to the right," "exhale towards the door," "exhale away from the fan," "exhale to the north," or other speech instructions. Tactile indicators may include haptic feedback, taps, thumps, vibrations, or other indicators designed to be perceived by touch. Tactile indicators may be provided by haptic motors, vibration motors, or other devices configured to signal the user through their sense of touch.

The method may further comprise providing instructions to cause the air pattern in proximity to the aerosol generating device to be modified. Such instructions may be provided to the user, fan, air purifying unit, HVAC system, smart devices, or other devices configured to provide airflow. Instructions to cause the air pattern in proximity to the aerosol generating device to be modified may include to, for example, modify fan settings, modify HVAC settings, modify air purifying unit settings, open or close a window, open or close a door, or other actions that may modify airflow. Such instructions may modify airflow and the air pattern in proximity to the aerosol generating device to direct exhaled aerosol constituents in a desired direction.

The methods described herein may be carried out by the aerosol generating device. Alternatively, methods described herein may be carried out by a system. The system may comprise the aerosol generating device.

The aerosol generating device may comprise an output indicator. The control electronics may be configured to cause the output indicator to indicate a direction in which a user should exhale after drawing on an aerosol generating device based on the air pattern. The output indicator may include one or more lights configured to emit light to indicate the direction in which the user should exhale. The one or more lights may blink to indicate a direction the user should turn to face the direction the user should exhale. The one or more lights may emit light without blinking to indicate that the user is facing the direction the user should exhale. The output indicator may include one or more speakers configured to provide audible indications of the direction the user should exhale. Audible indications may include audible words, beeps, chirps, or other sounds.

The aerosol generating device may comprise a receiver operatively coupled to the control electronics. The receiver may be configured to receive data regarding one or more parameters regarding an air pattern external to, and in proximity to, the aerosol generating device. The receiver may be configured to receive data using wireless protocols, for example, WiFi, Bluetooth, NFC, or other wireless protocol. The receiver may provide received data to the control electronics. The receiver may receive data from the aerosol generating device, an HVAC system, fans, thermostats, vacuums, or other smart devices. The control electronics may be configured to cause the output indicator to indicate a direction in which a user should exhale based on the data regarding the one or more airflow parameters.

The air pattern detection subsystem may comprise an airflow sensor. The air pattern detection subsystem may comprise mapping apparatus configured to map a three-dimensional space in proximity to the aerosol generating device. The mapping apparatus may be configured to identify the location of the aerosol generating device in the mapped three-dimensional space. The mapping apparatus may be configured to identify the location of an individual in the mapped three-dimensional space. The mapping apparatus may be configured to identify the location of low and high threshold target areas in the mapped three-dimensional space.

The air pattern detection subsystem may comprise mapping apparatus configured to map a two-dimensional space in proximity to the aerosol generating device. The mapping apparatus may be configured to identify the location of the aerosol generating device in the mapped two-dimensional space. The mapping apparatus may be configured to identify the location of an individual in the mapped two-dimensional space. The mapping apparatus may be configured to identify the location of low and high threshold target areas in the mapped two-dimensional space.

The exhale determination subsystem may be configured to receive input regarding desired flow of exhaled constituents in the mapped three-dimensional space. The exhale determination subsystem may comprise a display configured to graphically render the mapped three-dimensional space. The exhale determination subsystem may be configured to receive input based on the graphically rendered the mapped three-dimensional space. Graphically rendering the mapped three-dimensional space may include augmented or virtual reality. Indicators may be overlayed on the rendering of the mapped three-dimensional space to indicate one or more of an exhale direction, a predetermined target, a location of one or more aerosol generating devices, an estimated aerosol constituent concentration, an airflow source, an airflow pattern, other indications mapped to the space, and the like.

The exhale determination subsystem may be configured to receive input regarding desired flow of exhaled aerosol constituents in the mapped two-dimensional space. The exhale determination subsystem may comprise a display configured to graphically render the mapped two-dimensional space. The exhale determination subsystem may be configured to receive input based on the graphically rendered the mapped two-dimensional space. Graphically rendering the mapped two-dimensional space may include a top-down plan view of the space. Indicators may be overlayed on the rendering of the mapped two-dimensional space to indicate one or more of an exhale direction, a predetermined target, a location of one or more aerosol generating devices, an estimated aerosol constituent concentration, an airflow source, an airflow pattern, other indications mapped to the space, and the like.

The aerosol generating device may comprise a component of one or more of the air pattern detection subsystem, the exhale direction determination subsystem, and the output indicator subsystem. The aerosol generating device may include control electronics that include one or more of the air pattern detection subsystem, the exhale direction determination subsystem, or the output indicator subsystem. The aerosol generating device may include one or more lights that are included in the output indicator subsystem.

The air pattern detection subsystem may comprise a plurality of aerosol generating devices. Each of the plurality of aerosol generating devices may comprise a receptacle, an aerosol generating apparatus, control electronics, and an airflow sensor. The receptacle may be configured to receive an aerosol generating article. The aerosol generating apparatus may be configured to cause the aerosol generating article to generate an aerosol for inhalation by a user. The control electronics may be operatively coupled to the aerosol generating apparatus. The airflow sensor may be configured to detect one or more parameters of airflow external to the aerosol generating device.

The control electronics of each of the plurality of aerosol generating circuits may be configured to exchange environmental data with one another. The control electronics may include a transceiver to transmit and receive data via a wireless protocol. Wireless protocols may include, for example, Bluetooth, Wi-Fi, Near Field Communication (NFC), or other wireless protocol. The environmental data may comprise positional data of the plurality of aerosol generating devices. The positional data may be used by the mapping apparatus to identify a location of each of the aerosol generating devices. The positional data may include GPS coordinates or distance of the aerosol generating devices to a known location or object. The environmental data may comprise the one or more parameters of airflow. Each of the aerosol generating devices may determine an airflow pattern in proximity to itself and transmit such data to other aerosol generating devices.

As used herein, the singular forms "a," "an," and "the" also encompass embodiments having plural referents, unless the content clearly dictates otherwise.

The words "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure, including the claims.

As used herein, an "aerosol generating device" is a device that generates an aerosol that may be inhaled by a user or that delivers a particle to a user's lungs when the user draws on the aerosol generating device. The aerosol generating device may be a device that heats, but does not combust an aerosol generating substrate, such as a substrate that comprise tobacco. The aerosol generating device may comprise a device that heats, vaporizes, or nebulizes a liquid to cause aerosol formation. The liquid may comprise nicotine. The aerosol generating device may comprise a powder inhaler, such as a dry powder inhaler, configured to deliver particles to a user. The particles may comprise nicotine. The particles may be sized, and the device may be configured, such that the particles are delivered to a user's lungs when the user draws on the aerosol generating device.

As used herein, "drawing on," in the context of an aerosol generating device, is the act of inhaling from, or puffing on, aerosol generated by the device. Drawing on an aerosol generating device may include inhaling from a mouthpiece end of an aerosol generating device or a mouthpiece end of an aerosol generating article received in an aerosol generating device.

As used herein, "exhaled constituents" are constituents exhaled by a user after drawing on an aerosol generating device.

As used herein, "air pattern" is information regarding characteristics and parameters of air within different locations of an environment, which may be defined by a region. The air pattern may include information about airflow velocities, airflow vectors, airflow gradients, or other airflow data within the region. An air pattern in a region or in a proximity to something may include one or more airflows or one or more pockets of stagnant air. Air patterns may be mapped and provided to a user. The air pattern may be an indoor air pattern. The indoor air pattern may exclude outdoor air pattern factors such as wind direction and wind speed.

As used herein, "mapping" is the process of associating data with a space or region. Such data may be associated or mapped in two-dimensional or three-dimensional space. Data may include the position of objects, walls, devices, systems, doorways, windows, or other physical features within the space. Data may also include air patterns, exhaled constituent concentrations, predetermined targets, or other data. For example, an air pattern may be mapped in a three-dimensional space by assigning vectors to points in the three-dimensional space. The mapped air pattern may indicate, for example, the direction and speed of airflow at each point. Such a map may depict airflow gradients, regions with little or no airflow, and regions with high airflow.

As used herein, "vicinity" is the area or volume near or surrounding and in fluid communication with an individual, thing, or place. A vicinity may be a two-dimensional or three-dimensional region defined by a radius surrounding the individual, thing, or place. The radius may be at least 2 feet and no greater than 6 feet. The two-dimensional or three-dimensional region may be further defined by, for example, walls, doors, or other barriers, that prevent areas within the radius from being in fluid communication with the individual, thing, or place.

As used herein, "threshold direction" is an exhale direction that is likely to result in the concentration of exhaled constituents being below a threshold concentration at a particular location. For example, the threshold direction may indicate an exhale direction is likely to result in the concentration of exhaled constituents in air in the vicinity of an individual other than the user being below a threshold value.

As used herein, "minimum direction" is an exhale direction that modelling, simulation, or analysis indicates is likely to result in the lowest concentration of exhaled constituents at a particular location compared to other directions. Minimum may be an approximation based on a limited number of iterations and not necessarily an absolute minimum.

As used herein, "maximum direction" is an exhale direction that modelling, simulation, or analysis indicates is likely to result in the highest concentration of exhaled constituents at a particular location compared to other directions. Maximum may be an approximation based on a limited number of iterations and not necessarily an absolute maximum.

As used herein, a "predetermined target" is a target concentration of an exhaled constituent at a target location based on information regarding the location. For example, the target location that may be assessed as a high threshold target or a low threshold target based on whether the space is a designated smoking or non-smoking area, a restaurant, a ventilated space, an outdoor space, or other information about the space.

As used herein, "turnover rate" is the time it takes for exhaled constituents to be removed from an area without additional exhaled constituents being added to the space.

As used herein, "directional indicator" is an alert or communication that can be provided to a user that includes directional information. Direction indicators may include lights, audible instructions, images on a graphical user interface, or other alerts. The alerts may be provided by an aerosol generating device, a mobile device, a smart device such as a smart watch, a speaker, a wearable, or other device capable of emitting light, producing images, or producing sound.

As used herein, "likely" refers to a probability of something occurring being at least 60 percent.

As used herein, "augmented reality" is an interactive experience of a real-world environment where the objects that reside in the real world are enhanced by computer-generated perceptual information. Such perceptual information may include multiple sensory modalities such as, for example, visual, auditory, haptic, somatosensory, or olfactory.

As used herein, "virtual reality" is a computer-generated simulation in which a person can interact within an artificial three-dimensional environment using electronic devices.

Examples will now be further described with reference to the figures in which:
**FIG. 1** is schematic side plan view of an aerosol generating device according to an embodiment of the present invention;
**FIG. 2** is schematic block diagram illustrating a system according to an embodiment of the present invention; and
**FIG. 3** is a schematic view of a user using a system according to an embodiment of the present invention.

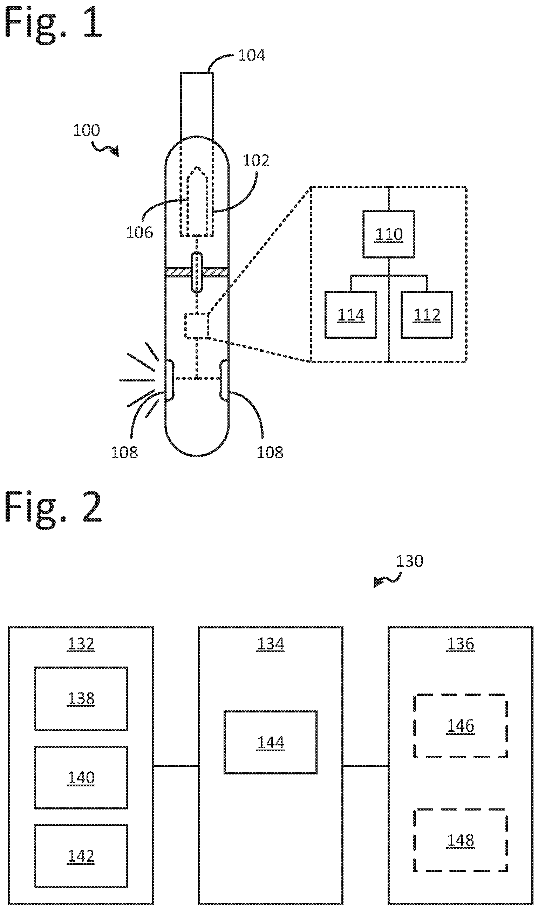

**FIG. 1** illustrates an example of an aerosol generating device **100.** The aerosol generating device **100** has a receptacle **102,** an aerosol generating apparatus **106,** output indicators **108,** control electronics **110,** an airflow sensor **112,** and a receiver **114.** An aerosol generating article **104** is received in the receptacle **102** and is in contact with the aerosol generating apparatus **106.** The aerosol generating apparatus **106** is configured to cause the aerosol generating article **104** to generate an aerosol for inhalation by a user. The aerosol generating apparatus **106** may be a heater, a vaporizer, or other device configured to generate an aerosol for inhalation by a user. The control electronics **110** are operatively coupled to the aerosol generating apparatus **106.** The control electronics **110** may be configured to provide power to the aerosol generating apparatus **106** to generate a desirable amount of aerosol for inhalation.

The airflow sensor **112** is operatively coupled to the control electronics **110.** The airflow sensor may be configured to detect parameters regarding an air pattern in proximity to the aerosol generating device **100.** Parameters regarding an air pattern may include velocity, mass, turbulence, temperature, pressure, or other airflow indicators.

The output indicators **108** are operatively coupled to the control electronics **110.** The control electronics **110** may be configured to cause the output indicator to indicate a direction in which a user should exhale after drawing on the aerosol generating device **100.**

**FIG. 2** illustrates an example block diagram of a system **130** including an air pattern detection subsystem **132,** an exhale direction determination subsystem **134,** and an output indicator subsystem **136.**

The air pattern detection subsystem **132** may be configured to detect parameters regarding an air pattern in proximity to an aerosol generating device such as, for example, aerosol generating device **100 of** **FIG. 1****.** Parameters regarding an air pattern may include velocity, mass, turbulence, temperature, pressure, or other airflow indicators. The air pattern detection subsystem **132** includes an airflow sensor **138.** The airflow sensor **138** may be configured to sense one or more parameters of airflow external to an aerosol generating device. The airflow sensor **138** may be incorporated in an aerosol generating device, a fan, a computing device, a ventilation system, an HVAC system, a vehicle such as a car, or other electronic device.

The air pattern detection subsystem **132** includes a mapping apparatus **140** configured to map a space in proximity to the aerosol generating device. The mapping apparatus **140** may be configured to map the space in two or three dimensions. The mapping apparatus **140** may be configured to use sensed parameters of airflow to map airflow patterns within the space in proximity to the aerosol generating device. Mapping may include assigning airflow vectors to coordinates within the space, assigning objects or obstacles to coordinates within the space, assigning sources of airflow to coordinates within the space, or assigning additional aerosol generating devices to coordinates within the space. Mapping may further include updating positions or coordinates of such objects or parameters on a periodic basis.

The air pattern detection subsystem further includes one or more aerosol generating devices **142.** The one or more aerosol generating devices **142** may include the same components as the aerosol generating device **100 of** **FIG. 1****.** For example, each of the aerosol generating devices **142** may include a receptacle, an aerosol generating apparatus, output indicators **108,** control electronics, an airflow sensor, and a receiver. The aerosol generating devices **142** may be configured to communicate with or provide data to one another or to a computing device for processing. Such data processing may allow determination and mapping of the positions of the aerosol generating devices **142** and air patterns in proximity to the aerosol generating devices **142.**

The exhale direction determination subsystem **134** is configured to map a space in proximity to the one or more aerosol generating devices **142** and determine an exhale direction. The exhale direction determination subsystem **134** may be configured to receive input regarding desired flow of exhaled constituents in the mapped space. The input may be received via a user interface such as, for example, a touchscreen, a keyboard, a mouse, voice commands, or other user interaction. The exhale determination subsystem includes a display **144** configured to render the mapped space. The mapped space may be represented as a two-dimensional or three-dimensional space. A two-dimensional representation may be presented as a top down or plan view of the mapped space. A three-dimensional representation may be displayed using augmented or virtual reality. The presentation of the mapped space may include indicators that indicate an exhale direction, a predetermined location, a location of one or more aerosol generating devices, an estimated aerosol constituent concentration, an airflow source, an airflow pattern, or other indications mapped to the space.

The output indicator subsystem **136** is configured to provide an indication to the user of the determined direction the user should exhale. Such indication may be provided using the display **144.** The display **144** may provide a cardinal, ordinal, or intercardinal direction indication of the direction the user should exhale in two-dimensional space. In three-dimensional space, the display **144** may provide an image indicating the direction the user should exhale. Such image may be a static image. Alternatively, augmented or virtual reality may be used to provide the user with an indication of which direction to exhale. For example, the display **144** may be included in a smart device that allows the user to see different portions of the mapped space as the smart device or user moves throughout the mapped space. An interior of a vehicle, such as a car, may comprise the display **144.** Additionally, indicators may be presented to the user depending on what portions of the mapped space are presented on the display **144.** The smart device may be configured to present a portion of the mapped space that is visible to a camera of the smart device. If the camera is directed at a high or low threshold target, an indicator may be provided to the user on the display **144** that identifies such high or low threshold target. As the user moves the smart device or turns an indicator indicating the exhale direction may be provided on the display **144** when the camera is facing the exhale direction. If the exhale direction is not visible to the camera, an indicator indicating a direction the user should turn to be facing the exhale direction may be provided on the display **144.**

The output indicator subsystem **136** may be configured to provide an indication to the user of the determined direction the user should exhale using an aerosol generating device. The output indicator subsystem **136** may optionally include one or more lights **146** or speakers **148.** Lights **146** may be configured to emit light based on the exhale direction and the direction the user is facing. A light **146** closest to the exhale direction may be configured to emit light to indicate the direction the user should exhale. The light **146** closest to the exhale direction may be configured to blink or emit a first color to indicate the user should turn to face the exhale direction. As the user turns towards the exhale direction the light **146** may blink faster or change color. All lights **146** of the aerosol generating device may be configured to emit light if the user is facing the exhale direction. One or more speakers **148** may be configured to provide audible word-based instructions to indicate the exhale direction. Audible instructions may include, for example, "exhale left," "exhale right," "exhale north," or other word-based direction indications. The one or more **148** speakers may be configured to beep or chime to indicate the exhale direction. The lights **146** or speakers **148** may be incorporated into an aerosol generating device, a smart phone, a wearable device, a vehicle such as a car, or other mobile computing device.

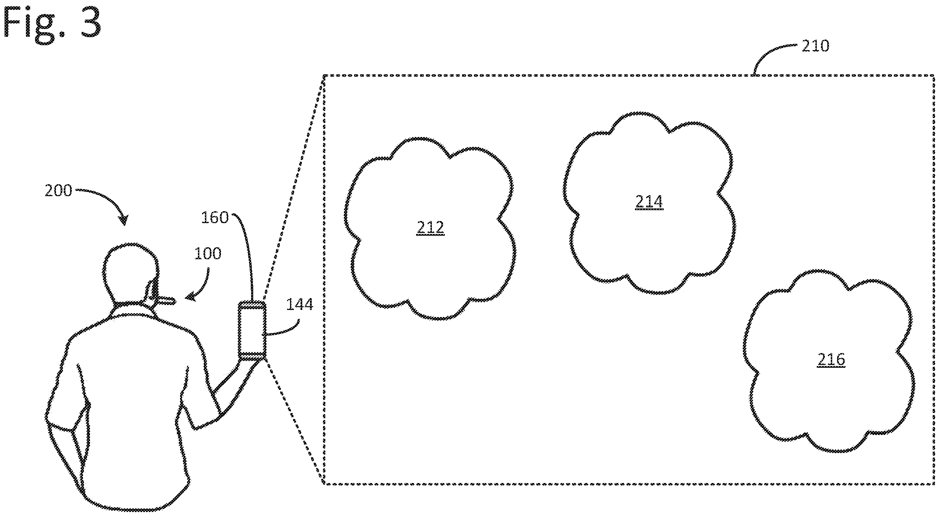

**FIG. 3** illustrates a schematic view of a user **200** using a system for indicating an exhale direction to exhale after drawing on an aerosol generating device **100.** The system includes the aerosol generating device **100** and a computing device **160.** Various components of the system may be included in the aerosol generating device **100** or the computing device **160.** For example, the aerosol generating device **100** or the computing device **160** may include one or more of an air pattern detection subsystem, an exhale direction determination subsystem, and an output indicator subsystem as described herein.

The computing device **160** includes a display **162.** As the user **200** uses or draws on the aerosol generating device, a mapped space **210** including indicators **212, 214, 216** is displayed to the user on the display **162.** The mapped space **210** may be represented in two or three dimensions. A two-dimensional representation of the mapped space **210** may be a top-down plan view of the space. A three-dimensional representation of the mapped space **210** may include one or more images of portions of the mapped space, augmented reality of the mapped space **210,** or a virtual reality rendering of the mapped space **210.** The indicators **212, 214, 216** may indicate an exhale direction, a predetermined target, a location of one or more aerosol generating devices, an estimated exhaled constituent concentration, an airflow source, an airflow pattern, other indications mapped to the space.

## Claims

1. A method for indicating an exhale direction for a user (200) to exhale after drawing on an aerosol generating device (100, 142), the method comprising:
determining an air pattern in proximity to an aerosol generating device (100, 142); and
indicating the exhale direction based on the air pattern.

2. A method according to claim 1, wherein determining the air pattern in proximity to the aerosol generating device (100, 142) comprises determining a direction of airflow in proximity to the aerosol generating device (100, 142).

3. A method according to any one of claims 1 to 2, wherein determining the air pattern in proximity to the aerosol generating device (100, 142) comprises determining a speed of airflow in proximity to the aerosol generating device (100, 142).

4. A method according to any one of claims 1 to 3, wherein determining the air pattern in proximity to the aerosol generating device (100, 142) comprises determining a turbulence of airflow in proximity to the aerosol generating device (100, 142).

5. A method according to any one of claims 2 to 4, wherein determining one or more of the direction of airflow, the speed of airflow, and the turbulence of airflow in proximity to the aerosol generating device (100, 142) comprises collecting data from an airflow sensor (112).

6. A method according to claim 5, wherein the aerosol generating device (100, 142) comprises the airflow sensor (112).

7. A method according to claim 5, wherein the airflow sensor (112) is remote from the aerosol generating device (100, 142).

8. A method according to any one of claims 2 to 7, wherein determining one or more of the direction of airflow, the speed of airflow, and the turbulence of airflow in proximity to the aerosol generating device (100, 142) comprises processing data from a ventilation system.

9. A method according to claim 8, wherein determining one or more of the direction of airflow, the speed of airflow, and the turbulence of airflow in proximity to the aerosol generating device (100, 142) comprises processing data from a heating, ventilation, and air conditioning system.

10. A method according to any one of claims 1 to 9, wherein determining the air pattern in proximity to the aerosol generating device (100, 142) comprises mapping an aspect of the air pattern on a three-dimensional representation of a space (210) in proximity to the aerosol generating article (104).

11. A method according to claim 10, further comprising mapping the three-dimensional space (210) in proximity to the aerosol generating article (104) to generate the three-dimensional representation of the space.

12. A method according to claim 10 or 11, further comprising identifying a location of the aerosol generating device (100, 142) in the map of the three-dimensional space (210).

13. An aerosol generating device (100, 142) configured to carry out a method according to any one of claims 1 to 12, wherein the aerosol generating device (100, 142) comprises: a receptacle (102) configured to receive an aerosol generating article (104); an aerosol generating apparatus (106) configured to cause the aerosol generating article (104) to generate an aerosol for inhalation by a user (200); control electronics (110) operatively coupled to the aerosol generating apparatus (106); an airflow sensor (112) configured to detect one or more parameters of airflow external to the aerosol generating device (100, 142), wherein the control electronics (110) are operatively coupled to airflow sensor (112); and an output indicator (108), wherein the control electronics (110) are configured to cause the output indicator (108) to indicate a direction in which a user (200) should exhale after drawing on an aerosol generating device (100, 142) based on the one or more detected airflow parameters.

14. A system (130) configured to carry out the method of any one of claims 1 to 12, wherein the system comprises: an air pattern detection subsystem (132) configured to detect parameters regarding an air pattern in proximity to an aerosol generating device (100, 142); an exhale direction determination subsystem (134) configured to determine a direction a user (200) should exhale after drawing on the aerosol generating device (100, 142) based on the detected parameters regarding the air pattern; and an output indicator subsystem (136) configured to provide an indication to the user (200) of the determined direction the user (200) should exhale.

15. A system (130) according to claim 14, comprising the aerosol generating device (100, 142).

## Patentansprüche

1. Verfahren für ein Angeben einer Ausatmungsrichtung für einen Benutzer (200) für ein Ausatmen nach einem Ziehen an einer Aerosolerzeugungsvorrichtung (100, 142), das Verfahren umfassend:
Bestimmen eines Luftmusters in der Nähe einer Aerosolerzeugungsvorrichtung (100, 142); und
Angeben der Ausatmungsrichtung basierend auf dem Luftmuster.

2. Verfahren nach Anspruch 1, wobei das Bestimmen des Luftmusters in der Nähe der Aerosolerzeugungsvorrichtung (100, 142) ein Bestimmen einer Richtung eines Luftstroms in der Nähe der Aerosolerzeugungsvorrichtung (100, 142) umfasst.

3. Verfahren nach einem der Ansprüche 1 bis 2, wobei das Bestimmen des Luftmusters in der Nähe der Aerosolerzeugungsvorrichtung (100, 142) ein Bestimmen einer Geschwindigkeit eines Luftstroms in der Nähe der Aerosolerzeugungsvorrichtung (100, 142) umfasst.

4. Verfahren nach einem beliebigen der Ansprüche 1 bis 3, wobei das Bestimmen des Luftmusters in der Nähe der Aerosolerzeugungsvorrichtung (100, 142) ein Bestimmen einer Turbulenz eines Luftstroms in der Nähe der Aerosolerzeugungsvorrichtung (100, 142) umfasst.

5. Verfahren nach einem beliebigen der Ansprüche 2 bis 4, wobei das Bestimmen eines oder mehrerer der Richtung des Luftstroms, der Geschwindigkeit des Luftstroms und der Turbulenz des Luftstroms in der Nähe der Aerosolerzeugungsvorrichtung (100, 142) ein Erfassen von Daten von einem Luftstromsensor (112) umfasst.

6. Verfahren nach Anspruch 5, wobei die Aerosolerzeugungsvorrichtung (100, 142) den Luftstromsensor (112) umfasst.

7. Verfahren nach Anspruch 5, wobei der Luftstromsensor (112) von der Aerosolerzeugungsvorrichtung (100, 142) entfernt ist.

8. Verfahren nach einem beliebigen der Ansprüche 2 bis 7, wobei das Bestimmen der Richtung des Luftstroms, der Geschwindigkeit des Luftstroms oder der Turbulenz des Luftstroms in der Nähe der Aerosolerzeugungsvorrichtung (100, 142) ein Verarbeiten von Daten von einem Lüftungssystem umfasst.

9. Verfahren nach Anspruch 8, wobei das Bestimmen eines oder mehrerer der Richtung des Luftstroms, der Geschwindigkeit des Luftstroms und der Turbulenz des Luftstroms in der Nähe der Aerosolerzeugungsvorrichtung (100, 142) ein Verarbeiten von Daten von einem Heizungs-, Lüftungs- und Klimasystem umfasst.

10. Verfahren nach einem beliebigen der Ansprüche 1 bis 9, wobei das Bestimmen des Luftmusters in der Nähe der Aerosolerzeugungsvorrichtung (100, 142) ein Abbilden eines Aspekts des Luftmusters auf einer dreidimensionalen Darstellung eines Raums (210) in der Nähe des aerosolerzeugenden Artikels (104) umfasst.

11. Verfahren nach Anspruch 10, ferner umfassend ein Abbilden des dreidimensionalen Raums (210) in der Nähe des aerosolerzeugenden Artikels (104), um die dreidimensionale Darstellung des Raums zu erzeugen.

12. Verfahren nach Anspruch 10 oder 11, ferner umfassend ein Identifizieren einer Position der Aerosolerzeugungsvorrichtung (100, 142) in der Karte des dreidimensionalen Raums (210).

13. Aerosolerzeugungsvorrichtung (100, 142), eingerichtet für ein Durchführen eines Verfahrens nach einem beliebigen der Ansprüche 1 bis 12, wobei die Aerosolerzeugungsvorrichtung (100, 142) umfasst: eine Aufnahme (102), die dazu eingerichtet ist, einen aerosolerzeugenden Artikel (104) aufzunehmen; eine Aerosolerzeugungsvorrichtung (106), die dazu eingerichtet ist, den aerosolerzeugenden Artikel (104) zu veranlassen, ein Aerosol für ein Inhalieren durch einen Benutzer (200) zu erzeugen; Steuerelektronik (110), die mit der Aerosolerzeugungsvorrichtung (106) wirkverbunden ist; einen Luftstromsensor (112), der dazu eingerichtet ist, einen oder mehrere Parameter des Luftstroms außerhalb der Aerosolerzeugungsvorrichtung (100, 142) zu detektieren, wobei die Steuerelektronik (110) mit dem Luftstromsensor (112) wirkverbunden ist; und eine Ausgabeanzeige (108), wobei die Steuerelektronik (110) dazu eingerichtet ist, die Ausgabeanzeige (108) zu veranlassen, eine Richtung anzugeben, in der ein Benutzer (200) nach einem Ziehen an einer Aerosolerzeugungsvorrichtung (100, 142) basierend auf dem einen oder mehreren detektierten Luftstromparametern ausatmen sollte.

14. System (130), eingerichtet für ein Durchführen des Verfahrens nach einem beliebigen der Ansprüche 1 bis 12, wobei das System umfasst: ein Luftmusterdetektions-Untersystem (132), das dazu eingerichtet ist, Parameter bezüglich eines Luftmusters in der Nähe einer Aerosolerzeugungsvorrichtung (100, 142) zu bestimmen; ein Ausatmungsrichtungs-Bestimmungsuntersystem (134), das dazu eingerichtet ist, basierend auf den ermittelten Parametern bezüglich des Luftmusters eine Richtung zu bestimmen, in die ein Benutzer (200) nach einem Ziehen an der Aerosolerzeugungsvorrichtung (100, 142) ausatmen sollte; und ein Ausgabeanzeige-Untersystem (136), das dazu eingerichtet ist, dem Benutzer (200) eine Angabe der bestimmten Richtung, in die der Benutzer (200) ausatmen sollte, bereitzustellen.

15. System (130) nach Anspruch 14, umfassend die Aerosolerzeugungsvorrichtung (100, 142).

## Revendications

1. Procédé pour indiquer une direction d'exhalation dans laquelle un utilisateur (200) doit exhaler après avoir tiré sur un dispositif de génération d'aérosol (100, 142), le procédé comprenant :
la détermination d'une caractéristique de diffusion d'air à proximité d'un dispositif de génération d'aérosol (100, 142) ; et
l'indication de la direction d'exhalation sur la base de la caractéristique de diffusion d'air.

2. Procédé selon la revendication 1, dans lequel la détermination de la caractéristique de diffusion d'air à proximité du dispositif de génération d'aérosol (100, 142) comprend la détermination d'une direction d'écoulement d'air à proximité du dispositif de génération d'aérosol (100, 142).

3. Procédé selon l'une quelconque des revendications 1 à 2, dans lequel la détermination de la caractéristique de diffusion d'air à proximité du dispositif de génération d'aérosol (100, 142) comprend la détermination d'une vitesse d'écoulement d'air à proximité du dispositif de génération d'aérosol (100, 142).

4. Procédé selon l'une quelconque des revendications 1 à 3, dans lequel la détermination de la caractéristique de diffusion d'air à proximité du dispositif de génération d'aérosol (100, 142) comprend la détermination d'une turbulence d'écoulement d'air à proximité du dispositif de génération d'aérosol (100, 142).

5. Procédé selon l'une quelconque des revendications 2 à 4, dans lequel la détermination d'un ou plusieurs parmi la direction d'écoulement d'air, la vitesse d'écoulement d'air et la turbulence d'écoulement d'air à proximité du dispositif de génération d'aérosol (100, 142) comprend la collecte de données à partir d'un capteur d'écoulement d'air (112).

6. Procédé selon la revendication 5, dans lequel le dispositif de génération d'aérosol (100, 142) comprend le capteur d'écoulement d'air (112).

7. Procédé selon la revendication 5, dans lequel le capteur d'écoulement d'air (112) est distant du dispositif de génération d'aérosol (100, 142).

8. Procédé selon l'une quelconque des revendications 2 à 7, dans lequel la détermination d'un ou plusieurs parmi la direction d'écoulement d'air, la vitesse d'écoulement d'air et la turbulence d'écoulement d'air à proximité du dispositif de génération d'aérosol (100, 142) comprend le traitement de données provenant d'un système de ventilation.

9. Procédé selon la revendication 8, dans lequel la détermination d'un ou plusieurs parmi la direction d'écoulement d'air, la vitesse d'écoulement d'air et la turbulence d'écoulement d'air à proximité du dispositif de génération d'aérosol (100, 142) comprend le traitement de données provenant d'un système de chauffage, ventilation et climatisation.

10. Procédé selon l'une quelconque des revendications 1 à 9, dans lequel la détermination de la caractéristique de diffusion d'air à proximité du dispositif de génération d'aérosol (100, 142) comprend le mappage d'un aspect de la caractéristique de diffusion d'air sur une représentation tridimensionnelle d'un espace (210) à proximité de l'article de génération d'aérosol (104).

11. Procédé selon la revendication 10, comprenant en outre le mappage de l'espace tridimensionnel (210) à proximité de l'article de génération d'aérosol (104) pour générer la représentation tridimensionnelle de l'espace.

12. Procédé selon la revendication 10 ou 11, comprenant en outre l'identification d'une localisation du dispositif de génération d'aérosol (100, 142) dans la carte de l'espace tridimensionnel (210).

13. Dispositif de génération d'aérosol (100, 142) configurée pour effectuer un procédé selon l'une quelconque des revendications 1 à 12, dans lequel le dispositif de génération d'aérosol (100, 142) comprend : un réceptacle (102) configuré pour recevoir un article de génération d'aérosol (104) ; un appareil de génération d'aérosol (106) configuré pour amener l'article de génération d'aérosol (104) à générer un aérosol pour une inhalation par un utilisateur (200) ; une électronique de commande (110) couplée de manière fonctionnelle à l'appareil de génération d'aérosol (106) ; un capteur d'écoulement d'air (112) configuré pour détecter un ou plusieurs paramètres d'écoulement d'air externe au dispositif de génération d'aérosol (100, 142), dans lequel l'électronique de commande (110) est couplée de manière fonctionnelle à un capteur d'écoulement d'air (112) ; et un indicateur de sortie (108), dans lequel l'électronique de commande (110) est configurée pour amener l'indicateur de sortie (108) à indiquer une direction dans laquelle un utilisateur (200) doit exhaler après avoir tiré sur un dispositif de génération d'aérosol (100, 142) sur la base des un ou plusieurs paramètres d'écoulement d'air détectés.

14. Système (130) configuré pour effectuer le procédé selon l'une quelconque des revendications 1 à 12, dans lequel le système comprend : un sous-système de détection de caractéristique de diffusion d'air (132) configuré pour détecter des paramètres concernant une caractéristique de diffusion d'air à proximité d'un dispositif de génération d'aérosol (100, 142) ; un sous-système de détermination de direction d'exhalation (134) configuré pour déterminer une direction dans laquelle un utilisateur (200) doit exhaler après avoir tiré sur le dispositif de génération d'aérosol (100, 142) sur la base des paramètres détectés concernant la configuration de diffusion d'air ; et un sous-système indicateur de sortie (136) configuré pour fournir une indication à l'utilisateur (200) de la direction déterminée dans laquelle l'utilisateur (200) doit exhaler.

15. Système (130) selon la revendication 14, comprenant le dispositif de génération d'aérosol (100, 142).
